# EUROPÄISCHE PATENTSCHRIFT

(11) **EP 3 504 515 B1**
(45) Veröffentlichungstag und Bekanntmachung des Hinweises auf die Patenterteilung: **09.02.2022**
(21) Anmeldenummer: 17752125.9
(22) Anmeldetag: 15.08.2017
(51) Int. Cl.: G01D 18/00

(54) **VERFAHREN ZUM KALIBRIEREN EINES DREHGEBERS UND DREHGEBER**
METHOD OF CALIBRATING AN ANGLE SENSOR AND ANGLE SENSOR
PROCÉDÉ DE CALIBRAGE D'UN CAPTEUR D'ANGLE ET CAPTEUR D'ANGLE

(30) Priorität: 23.08.2016 DE 102016115624
(43) Veröffentlichungstag der Anmeldung: 03.07.2019
(73) Patentinhaber: Fraba B.V., 6416 SG Heerlen (NL)
(72) Erfinder: LÖKEN, Michael, 52428 Jülich (DE); KETTERING, Uwe, 50968 Köln (DE)
(74) Vertreter: terpatent Patentanwälte ter Smitten Eberlein-Van Hoof Rütten Daubert
(86) Internationale Anmeldenummer: PCT/EP2017/070648
(87) Internationale Veröffentlichungsnummer: WO 2018/036862

(56) Entgegenhaltungen:
- DE-A1-102010 016 426
- DE-A1-102013 204 581
- DE-A1-102015 216 806
- US-A1- 2010 312 514
- KONINKLIJKE PHILIPS ELECTRONICS: "KMA2000, Programmable angle sensor. Product data sheet (Rev. 05)", INTERNET CITATION, 16. August 2005 (2005-08-16), XP009108367, Gefunden im Internet: URL:http://web.archive.org/web/20061116234 248/http://www.nxp.com/acrobat_download/da tasheets/KMA200_5.pdf [gefunden am 2008-11-06]

## Beschreibung

Die Erfindung betrifft ein Verfahren zum Kalibrieren eines Drehgebers zur Erfassung einer Drehwinkelposition einer Maschinenwelle, wobei der Drehgeber zumindest eine mit der Maschinenwelle drehfest verbundene Erregereinheit und eine mit der Erregereinheit funktional zusammenwirkende, feststehende Sensoreinheit aufweist. Ferner betrifft die Erfindung einen Drehgeber zur Bestimmung einer korrigierten Drehwinkelposition.

Die Information über eine aktuelle Position einer Maschinenwelle ist für einen präzisen Betrieb einer Maschine unerlässlich. Solche Positionsangaben spielen beispielsweise bei der Automatisierung von Anlagen, insbesondere zur Steuerung technischer, zumeist hochpräziser Vorgänge, eine wichtige Rolle. So sind beispielsweise zur Steuerung einer Werkzeugmaschine, eines Roboterarms oder ähnlicher Anwendungen stets Systeme zur Positionserfassung erforderlich. Ferner sind solche Systeme auch bei Elektromotoren zur Geschwindigkeits- oder Lageregelung erforderlich, insbesondere um zur Spulenansteuerung zu wissen, an welcher Stelle sich der Rotor befindet.

Inkrementelle Drehgeber dienen zur Erfassung von Positionsänderungen und können zur Messung einer Wegstrecke, Wegrichtung oder einer Winkeländerung eingesetzt werden. Solche Inkrementalgeber ermöglichen nur die Erfassung einer relativen Position innerhalb der Teilung einer Skala bzw. eines Strichcodes. Zur Bestimmung einer absoluten Position ist ein Erfassen einer gewissen Anzahl von überlaufenen Skalenteilungen erforderlich.

Absolute Drehgeber können die absolute Position einer Maschinenwelle direkt bestimmen. Dies erfolgt zumeist über eine codierte und jeweils einer bestimmten Winkelposition der Welle eindeutig zugeordneten Abtastung.

Um eine besonders hohe Messgenauigkeit zu ermöglichen, ist eine besonders exakte Positionierung sowie Kalibrierung des Messsystems erforderlich, insbesondere der Sensoreinheit gegenüber der Erregereinheit. Es hat sich gezeigt, dass die an der Sensoreinheit vorliegende Temperatur, insbesondere eine Temperaturveränderung, die Messgenauigkeit des Messsystems negativ beeinflussen kann. Solche Temperaturveränderungen können regelmäßig durch äußere Umwelteinflüsse, wie eine Sonneneinstrahlung, durch den Betrieb einer Maschine oder durch die Drehgeber-Elektronik an sich im Laufe des Betriebs des Drehgebers verursacht sein.

Beispielsweise kann bei einem Drehwinkelsensor, der bei Raumtemperatur kalibriert ist, bei Vorliegen einer erhöhten Umgebungstemperatur, zum Beispiel eine Temperatur von 100°C, eine Abweichung eines erfassten Positionswertes von einem tatsächlichen bzw. von dem bei Raumtemperatur kalibrierten Positionswert einer Drehwinkelposition auftreten. Die Ursache für eine solche temperaturabhängige Abweichung, auch Temperaturdrift genannt, kann bei einer erhöhten Temperatur beispielsweise in einer Ausdehnung der an dem Drehgeber oder an einer Maschine verwendeten Materialien und/oder einer Positionsveränderung der für eine Messung zueinander ausgerichteten Bauteile liegen. Letzteres kann insbesondere die in der Sensoreinheit üblicherweise angeordneten Komponenten, wie einen Hall-Sensor, AMR-Basissensor, optischen Sensor, Signalverstärker und/oder A/D-Wandler betreffen. In der Folge hieraus kann die fehlerhafte Erkennung einer Winkelposition, beispielsweise bei Verwendung des Drehgebers zur Ansteuerung eines Antriebsmotors, zu Rundlaufschwankungen in dem Motor und/oder zu einem Fehler in der Positionierung eines Bauteils, wie eines Roboterarms, führen.

Grundsätzlich ist es beispielsweise aus der US 2010/0312514 A1 bekannt, einen Sensor dadurch zu kalibrieren, dass drei verschiedene Positions-Messwerte jeweils bei Raumtemperatur und bei der vom Hersteller genannten Maximaltemperatur ermittelt werden.

Die DE 10 2010 016 426 A1 beschreibt ein Verfahren zum Kalibrieren eines Rotationsgebers, der einen drehbaren Prüfrotor und eine feststehende Sensoreinheit aufweist. Dabei wird bei konstanten Umgebungsbedingungen die Welle in eine Drehbewegung versetzt und es werden Signalwerte der Sensoreinheit erfasst. Durch Heizen oder Kühlen der Umgebung kann der Rotationsgeber auf eine vorgegebene Temperatur gebracht werden. Aus den gemessenen Signalwerten werden Korrekturwerte ermittelt und abgespeichert, die zum Korrigieren von Ausgangssignalwerten des Rotationsgebers verwendet werden.

Es hat sich jedoch gezeigt, dass auch eine derartige Kalibrierung fehlerbehaftet ist. Aufgabe der vorliegenden Erfindung ist es daher, ein Verfahren zum Kalibrieren eines Drehgebers bereitzustellen, bei dem mit relativ geringem Aufwand eine besonders hohe Messgenauigkeit des Drehgebers auch bei veränderten Umgebungs- und/oder Sensortemperaturen ermöglicht wird. Die Lösung der Aufgabe erfolgt erfindungsgemäß durch ein Verfahren mit den Merkmalen des Anspruchs 1 und durch einen Drehgeber mit den Merkmalen des Anspruchs 8. Vorteilhafte Ausgestaltungen und Weiterbildungen der Erfindung sind in den Unteransprüchen, der Beschreibung sowie den Figuren aufgeführt. Das erfindungsgemäße Verfahren zum Kalibrieren eines Drehgebers zur Erfassung einer Drehwinkelposition einer Maschinenwelle, insbesondere eines Absolutwertgebers, sieht die folgenden Schritte vor: Versetzen der Maschinenwelle in eine Drehbewegung mit einer vorgegebenen, insbesondere konstanten, Drehgeschwindigkeit bei Vorliegen einer ersten Sensortemperatur. Die erste Sensortemperatur entspricht bevorzugt der Raumtemperatur, das heißt etwa 21°Celsius. Die Drehgeschwindigkeit kann von dem Drehgeber selbst an einen Antriebsmotor bzw. an eine Steuerelektronik vorgegeben sein. Hierzu kann beispielsweise eine Drehzahl von etwa 1000 Umdrehungen pro Minute vorgesehen sein.

Es folgt ein automatisches Erfassen eines ersten Positions-Messwertes an einer vorgegebenen Drehwinkelposition mittels der Sensoreinheit bei Vorliegen der ersten Sensortemperatur, insbesondere der Raumtemperatur, Der erfasste erste Positionswert entspricht einem von der ersten Temperatur sowie dem Drehwinkel abhängigen Wert. Die vorgegebene Drehwinkelposition kann ein an der Maschinenwelle definierter Messpunkt sein, beispielsweise ein sogenannter Nulldurchgang der Maschinenwelle, Das Erfassen des ersten Positionsmesswertes bei der vorgegebenen Drehwinkelposition kann im Wesentlichen einem an sich bekannten und üblichen Kalibrierverfahren des Drehgebers entsprechen. Selbstverständlich ist es - beispielsweise durch eine Aneinanderreihung von erfassten Messwerten - möglich, einen bei der ersten Sensortemperatur über eine Umdrehung der Maschinenwelle ausgebildeten Winkelverlauf zu erfassen.

Nachdem der erste Positions-Messwert bei Vorliegen der ersten Sensortemperatur erfasst wurde, erfolgt nun die aktive Temperaturkalibrierung. Dazu erfolgt ein Verändern der an der Sensoreinheit anliegenden Sensortemperatur, insbesondere ein Heizen oder Kühlen der Sensoreinheit auf eine zweite Sensortemperatur, die höher oder niedriger als die erste Sensortemperatur ist. Erfindungsgemäß erfolgt lediglich ein lokales Aufheizen bzw. Kühlen der Sensoreinheit, so dass nur einzelne Bereiche oder Komponenten der Sensoreinheit die zweite Sensortemperatur aufweisen. Dies ist wesentlich effektiver, schneller und kostengünstiger, und dadurch können die an dem Drehgeber in einem Betrieb vorherrschenden Bedingungen besonders real nachempfunden werden. Beispielsweise wird nur ein Mikrocontroller des Drehgebers, der sich aufgrund seiner Betriebsart üblicherweise relativ schnell aufheizt, auf eine zweite Sensortemperatur versetzt. Das Heizen oder Kühlen kann mittels einer externen, das heißt von dem Drehgeber unabhängigen, Einrichtung erfolgen, beispielsweise mittels eines Heißluftföhns, Lasers, Infrarotstrahlers, Belüftungssystems, Kühlpads oder Dergleichen. Zum Heizen oder Kühlen der Sensoreinheit kann die Maschinenwelle grundsätzlich gestoppt werden und anschließend wieder in Drehbewegung versetzt werden. Vorteilhafterweise wird die Drehgeschwindigkeit der Maschinenwelle während des Aufheizens oder Abkühlens der Sensoreinheit konstant beibehalten, so dass der Aufwand und die Zeit zur Kalibrierung relativ gering gehalten sowie die Betriebsbedingungen des Drehgebers besonders realistisch nachgeahmt werden können.

Nach Erreichen der zweiten Sensortemperatur erfolgt erneut ein Erfassen eines zweiten Positions-Messwertes an der Drehwinkelposition bei Vorliegen der zweiten Sensortemperatur. Der erfasste zweite Positionswert entspricht einem von der zweiten Temperatur sowie dem Drehwinkel abhängigen Wert. Die Drehwinkelpositionen der ersten Messung bei Raumtemperatur und der zweiten Messung bei veränderter Temperatur können grundsätzlich verschieden angeordnet sein. Bevorzugt sind die Drehwinkelpositionen an derselben Stelle an der Maschinenwelle angeordnet, so dass das Erfassen des ersten Positions-Messwertes und des zweiten Positions-Messwertes jeweils an derselben Drehwinkelposition erfolgt. Vorteilhafterweise wird die zweite Sensortemperatur an der Sensoreinheit während des Erfassens konstant gehalten. Das Erfassen erfolgt wieder nach dem üblichen Verfahren, wobei es wiederum grundsätzlich möglich ist, nicht nur eine Einzelwertmessung pro Grad und Umdrehung durchzuführen sondern einen über die gesamte Umdrehung der Maschinenwelle ausgebildeten Winkelverlauf zu erfassen.

Es folgt ein Ermitteln einer Abweichung zumindest zwischen dem erfassten zweiten Positions-Messwert und einem vorgegebenen Soll-Positions-Messwert. Insbesondere wird ein Differenzbetrag zwischen dem zweiten Positions-Messwert und einem Soll-Positions-Messwert rechnerisch ermittelt, wobei der ermittelte Differenzbetrag einem von der Temperaturdifferenz und dem Drehwinkel abhängigen Wert entspricht. Dazu kann ein Berechnungsmodul aktiviert werden, wobei der vorgegebene Soll-Positions-Messwert in einem Speichermodul abrufbar gespeichert sein kann. Der Soll-Positions-Messwert gibt denjenigen Messwert an, der im Idealfall exakt an einer definierten Drehwinkelposition erfassbar ist. Dadurch kann eine "ideale" Positionsangabe erfolgen. Unter der Abweichung ist folglich eine Abweichung der gemessenen Winkelposition von der zuvor beschriebenen Ideal-Winkelposition der Maschinenwelle zu verstehen. Anhand der Abweichung kann unmittelbar ein Korrekturwert bestimmt werden, um den ein gemessener Positions-Messwert bei Vorliegen der entsprechenden Temperatur korrigiert werden muss.

Daher erfolgt in einem nächsten Schritt ein Korrigieren eines Ausgangssignals des Drehgebers um die ermittelte Abweichung bzw. um den Korrekturwert an der jeweiligen Drehwinkelposition und bei Vorliegen der zweiten Sensortemperatur. Vorteilhafterweise erfolgt pro Umdrehung ein Korrigieren eines jeden einzelnen Winkelwertes von 0° bis 360° entsprechend einer an der Sensoreinheit anliegenden Sensortemperatur. Dadurch kann auch bei einer von der Raumtemperatur abweichenden Sensortemperatur die Drehwinkelposition der Maschinenwelle mit dem Drehgeber exakt bestimmt werden, so dass eine Ansteuerung und/oder Positionierung insbesondere eines Antriebsmotors besonders exakt erfolgen kann.

Vorzugsweise wird das zuvor beschriebene Verfahren an zumindest zwei Drehwinkelpositionen pro Umdrehung der Maschinenwelle durchgeführt. Insbesondere kann in bzw. während einer Umdrehung der Maschinenwelle an mindestens zwei vorgegebenen Drehwinkelpositionen jeweils ein erster Positions-Messwert bei Vorliegen der ersten Sensortemperatur erfasst werden, und nach dem Heizen oder Kühlen der Sensoreinheit auf eine zweite Sensortemperatur in einer weiteren Umdrehung der Maschinenwelle an den Drehwinkelpositionen jeweils ein zweiter Positions-Messwert bei Vorliegen der zweiten Sensortemperatur erfasst werden, und sodann jeweils eine Abweichung des zweiten Positions-Messwertes von einem Soll-Positions-Messwert ermittelt werden. Anschließend kann jeweils an den Drehwinkelpositionen und bei Vorliegen der zweiten Sensortemperatur ein Korrigieren des Ausgangssignals des Drehgebers um die ermittelte Abweichung erfolgen. Besonders bevorzugt wird das Verfahren für eine jede über 360° verteilte Drehwinkelposition der Maschinenwelle durchgeführt, vorteilhafterweise in einer einzigen Umdrehung der Maschinenwelle. Alternativ oder zusätzlich zur Kontrolle kann die Abweichung über die Umdrehung auch mittels eines mathematischen Algorithmus annähernd berechnet werden. Dadurch kann über den gesamten Umfang der Maschinenwelle eine besonders exakte Kalibrierung des Drehgebers erfolgen. Zudem kann die Kalibrierung in relativ kurzer Zeit durchgeführt werden.

Vorzugsweise erfolgt zusätzlich ein Berechnen zumindest eines dritten Positions-Messwertes, der an der Drehwinkelposition bei Vorliegen einer dritten Sensortemperatur zu erwarten ist. Grundsätzlich kann die dritte Sensortemperatur einen beliebigen, von der ersten und zweiten Sensortemperatur abweichenden Wert aufweisen. Bevorzugt weist die dritte Temperatur einen Wert auf, der zwischen der ersten Temperatur und der zweiten Temperatur liegt. Der zu erwartende Messwert kann insbesondere durch eine Interpolation der bei Vorliegen der ersten und zweiten Temperatur bekannten Messwerte berechnet werden. Alternativ können auch außerhalb des gemessenen Temperaturintervalls zu erwartende Messwerte, insbesondere durch eine Extrapolation, berechnet werden. Insbesondere kann eine Inter- bzw. Extrapolation zum Einen bei Positions-Messwerten zwischen zwei Einträgen in der Korrekturtabelle und zum Anderen bei Temperaturen zwischen der ersten Kalibrationstemperatur (z.B. Raumtemperatur) und der zweiten Kompensationstemperatur (z.B. 100°C) stattfinden. Anhand dessen können ein Ermitteln einer Abweichung zwischen dem berechneten dritten Positions-Messwert und dem Soll-Positions-Messwert, und ein Korrigieren des Ausgangssignals des Drehgebers um die ermittelte Abweichung an der Drehwinkelposition bei Vorliegen der dritten Sensortemperatur erfolgen. Dadurch kann für jede beliebige, zwischen der ersten Temperatur und der zweiten Temperatur liegende Temperatur ein Winkelverlauf der Maschinenwelle berechnet werden und zur Korrektur der Messwerte herangezogen werden.

Vorzugsweise wird der zur Berechnung herangezogene Soll-Positions-Messwert durch den erfassten ersten Positions-Messwert gebildet. Der erste Positions-Messwert kann somit einem Soll-Positions-Messwert entsprechen und bevorzugt einen bei Raumtemperatur erfassbaren Wert darstellen, der als ein idealer Referenzwert angesehen werden kann. Dazu kann der erste Positions-Messwert in einem Speicher abrufbar hinterlegt sein und zum Ermitteln der Abweichung herangezogen werden.

Vorzugsweise wird der Soll-Positions-Messwert mittels eines Referenzwertgebers oder mittels eines hochgezählten Zeitwertes, der einer vorgegebenen Laufzeit der Drehbewegung von der ersten Drehwinkelposition bis zu der zweiten Drehwinkelposition entspricht, ermittelt. Ein solches Verfahren ist beispielsweise in der DE 10 2016 101 965.8 ausführlich beschrieben. Dadurch ist für jeden Drehgeber individuell eine besonders exakte Kalibrierung ermöglicht. Ferner kann die Kalibrierung mit einem Referenzwertgeber oder automatisch erfolgen.

Besonders bevorzugt erfolgt ein Speichern zumindest eines Positions-Messwertes und/oder der Abweichung in einem Speicher. Beispielweise werden sämtliche erfassten Positions-Messwerte und/oder berechnete Abweichungen in dem Speicher gespeichert und können zum Betreiben und Korrigieren des Drehgebers herangezogen werden. Bevorzugt sind die Positions-Messwerte und/oder Abweichungswerte für unterschiedliche, insbesondere zu erwartende Temperaturen, in dem Speicher hinterlegt.

Ferner kann ein Speichern einer Korrekturtabelle, des temperaturabhängigen Winkelverlaufs und/oder zumindest eines Korrekturwertes erfolgen. Dadurch kann für jede zu erwartende Temperatur eine besonders hohe Messgenauigkeit und Drehwinkelbestimmung des Drehgebers gewährleistet werden.

Vorteilhafterweise wird in einem Betrieb des Drehgebers die Sensortemperatur kontinuierlich erfasst. Dadurch kann der Drehgeber selbst - unabhängig von anderen Bauteilen - die Sensortemperatur kontinuierlich erfassen und einen der Sensortemperatur entsprechenden Korrekturwert für eine bestimmte Drehwinkelposition anwenden. Dadurch kann für jede zu erwartende Temperatur eine besonders hohe Messgenauigkeit und Drehwinkelbestimmung gewährleistet werden.

Der erfindungsgemäße Drehgeber zur Bestimmung einer korrigierten Drehwinkelposition einer Maschinenwelle, ausgestaltet zur Durchführung eines erfindungsgemäßen Verfahrens, insbesondere ein Absolutwertgeber, weist zumindest eine mit der Maschinenwelle drehfest verbindbare Erregereinheit sowie eine mit der Erregereinheit funktional zusammenwirkende, feststehende Sensoreinheit, insbesondere einen Hall-Sensor und einen Mikrocontroller auf. Zur temperaturabhängigen Kalibrierung sowie zur Bestimmung einer um eine Temperaturabweichung korrigierten Drehwinkelposition weist der Drehgeber erfindungsgemäß zusätzlich einen Temperatursensor und ein Berechnungsmodul auf. Somit ist der Drehgeber zur Ausführung des oben beschriebenen Verfahrens eingerichtet. Dazu kann der Drehgeber optional eine Temperaturauswertemodul zum Auswerten der an der Sensoreinheit anliegenden Temperatur aufweisen. Das Temperaturauswertemodul kann beispielsweise in den Mikrocontroller integriert sein. Folglich kann der Drehgeber selbstständig eine temperaturabhängige Kalibrierung zur temperaturkompensierten Bestimmung der Drehwinkelpositionen durchführen. Ferner kann im Betrieb des Drehgebers die Sensortemperatur kontinuierlich erfasst werden und ein entsprechender Korrekturwert für die jeweilige Drehwinkelposition automatisch angewendet werden. Dadurch kann ein Drehgeber bereitgestellt werden, der - unabhängig von der Umgebungs- und/oder Sensortemperatur eine besonders präzise Angabe der Drehwinkelposition ermöglicht.

Erfindungsgemäß weist der Drehgeber eine Heiz- und/oder Kühleinrichtung zum aktiven lokalen Heizen oder Kühlen einzelner Bereiche oder Komponenten der Sensoreinheit auf. Dadurch kann mit dem Drehgeber selbständig und unabhängig von externen Vorrichtungen eine temperaturabhängige Kalibrierung durchgeführt werden. Dies ist insbesondere bei einer regelmäßig durchzuführenden Kalibrierung vorteilhaft. Während des Betriebs des Drehgebers ist die Heiz- und/oder Kühleinrichtung vorzugsweise deaktiviert.

Vorzugsweise weist der Drehgeber ein Speichermodul zum Speichern zumindest eines Positions-Messwertes und/oder einer Abweichung auf. Der Speicher ist vorteilhafterweise in dem Drehgeber integriert, so dass die Anzahl der Bauteile relativ gering sein kann. Dadurch kann die Berechnung und Korrektur der erfassten Werte bei einer jeweiligen Temperatur unmittelbar an dem Drehgeber erfolgen, so dass eine separate Auswerteeinrichtung nicht erforderlich ist.

Vorzugsweise weist der Drehgeber ein Berechnungsmodul zum Berechnen zumindest eines Positions- Messwertes und/oder einer Abweichung zwischen einem Positions-Messwert und einem Soll-Positions-Messwert für zumindest eine vorgegebene Sensortemperatur auf. Dadurch kann die Berechnung und Korrektur der erfassten Werte bei einer jeweiligen Temperatur unmittelbar an dem Drehgeber erfolgen, so dass eine separate Auswerteeinrichtung nicht erforderlich ist.

Die Heiz- und/oder Kühleinrichtung kann zum Beheizen der Sensoreinheit zumindest einen elektrischen Draht aufweisen, der bei einer Bestromung Wärme erzeugt. Dadurch kann die Sensoreinheit in relativ einfacher Weise auf eine bestimmte Temperatur aufgeheizt und eine temperaturabhängige Kalibrierung durchgeführt werden.

Nachfolgend wird die Erfindung anhand eines bevorzugten Ausführungsbeispiels unter Bezugnahme auf die anliegenden Zeichnungen näher erläutert.
Figur 1 zeigt schematisch einen erfindungsgemäßen Drehgeber in einer in geschnittener Darstellung,
Figur 2 zeigt schematisch einen Ablauf des erfindungsgemäßen Verfahrens, und
Figur 3 zeigt schematisch je einen erfassten Winkelverlauf bei unterschiedlichen Temperaturen.

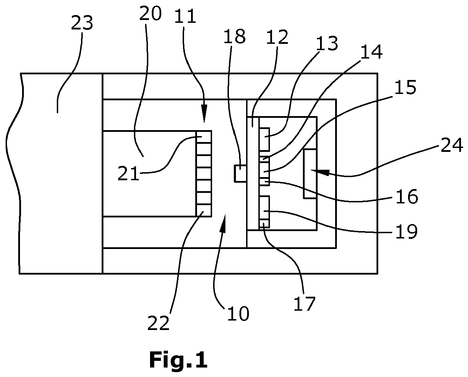

In der Figur 1 ist ein Beispiel eines erfindungsgemäßen Drehgebers 10 gezeigt. Der Drehgeber 10 ist an einem axialen Ende einer Maschinenwelle 20 angeordnet, wobei die Maschinenwelle 20 vorliegend als eine Antriebswelle eines Antriebsmotors 23 ausgebildet ist. Der Drehgeber 10 dient vorliegend zur exakten Ansteuerung des Antriebsmotors 23, und ist dazu mit einer Steuereinheit 24 des Antriebsmotors 23 elektrisch verbunden.

Der Drehgeber 10 weist eine an dem freien Ende der Antriebswelle 20 angeordnete und mit der Antriebswelle 20 drehfest verbundene magnetische Erregereinheit 11 auf. Die Erregereinheit 11 bildet mittels mehrerer über den Umfang angeordneter und vorliegend nicht näher dargestellter Permanentmagnete eine auslesbare magnetische Codespur, insbesondere mehrere erfassbare Drehwinkelpositionen 21, 22 auf. Grundsätzlich ist es möglich, lediglich einen als Dipol ausgebildeten Magneten zu verwenden, wobei hierbei lediglich zwei über den Umfang der Maschinenwelle angeordnete Drehwinkelpositionen 21, 22 erfassbar sind. Zum Auslesen der Codespur ist eine Sensoreinheit 12 vorgesehen, die zumindest einen Sensor 18, insbesondere einen Hallsensor, aufweist. Dazu kann der Hall-Sensor 18 mit den an der Antriebswelle 20 angeordneten Permanentmagneten in Wirkverbindung stehen und somit die Drehbewegung der Antriebswelle 20 erfassen. Die Erfassung 42, 44 einer Drehwinkelposition 21, 22, das heißt das Zusammenspiel der Erregereinheit 11 und der Sensoreinheit 12, kann folglich in einer an sich bekannten Art und Weise erfolgen,

Der Drehgeber 10 ist geeignet, an der Antriebswelle 20 eine automatische Kalibrierung 40 durchzuführen, insbesondere eine temperaturkompensierte Kalibrierung zur Vermeidung einer temperaturabhängigen Abweichung der erfassen Messwerte. Dazu weist der Drehgeber 10, insbesondere an der Sensoreinheit 12, einen Mikrokontroller 19, einen Temperatursensor 14 und eine Heiz-/Kühleinrichtung 15 zum aktiven Heizen 43a oder Kühlen 43b zumindest eines Bereichs des Drehgebers 10 auf. Dadurch kann der Drehgeber 10 eine Kalibrierung 40 vollkommen unabhängig von externen Vorrichtungen oder Einflüssen automatisch durchführen. Der Temperatursensor 14 ist als ein an sich bekannter Sensor zur Temperaturerfassung ausgebildet und erfasst insbesondere die an der Sensoreinheit 12 vorliegende Temperatur. Die erfasste Temperatur kann in einem nicht dargestellten Temperaturmodul, welches in dem Mikrocontroller 19 integriert sein kann, ausgewertet werden. Die Heiz-/Kühteinrichtung 15 umfasst einen elektrischen Draht 16, der bei Bestromung erwärmt wird und benachbarte Bauteile, wie die Sensoreinheit 12, beheizen kann. Dadurch kann die Sensortemperatur 12, beispielsweise zu Kalibrierungszwecken, von einer ersten Temperatur T1, beispielsweise einer Raumtemperatur, auf eine höhere zweite Temperatur T2, beispielsweise auf 100° Celsius, versetzt werden. Alternativ kann - indem die Sensoreinheit 12 durch die Heiz-Kühleinrichtung 15 auch kühlbar ist - auch bei einer sehr heißen Umgebungstemperatur T1 eine Kalibrierung gegen die bei Raumtemperatur T2 vorliegenden Messwerte 31.2, 32.2 vorgenommen werden

Zum Berechnen 45, 47a, 47b eines Positions-Messwertes 31.3, 32.3 und/oder einer Abweichung 35, 36 zwischen einem Positions-Messwert 31.1, 32.1, 31.2, 32.2, 31.3, 32.3 und einem Soll-Positions-Messwert 31.0, 32.0 für zumindest eine vorgegebene Sensortemperatur T1, T2, T3 weist der Drehgeber 10 ein Berechnungsmodul 17 auf. Das Berechnungsmodul 17 kann in dem Mikrocontroller 19 integriert sein.

Zum Speichern 48 zumindest eines zeitlichen Verlaufs von Positions-Messwerten 31.0, 32.0, 31.1, 32.1, 31.2, 32.2, 31.3, 32.3 und/oder einer nicht dargestellten Korrekturtabelle mit Abweichungswerten 35, 36, weist der Drehgeber 10 ein Speichermodul 13 auf. Das Speichermodul 13 kann ebenfalls in dem Mikrocontroller 19 integriert sein.

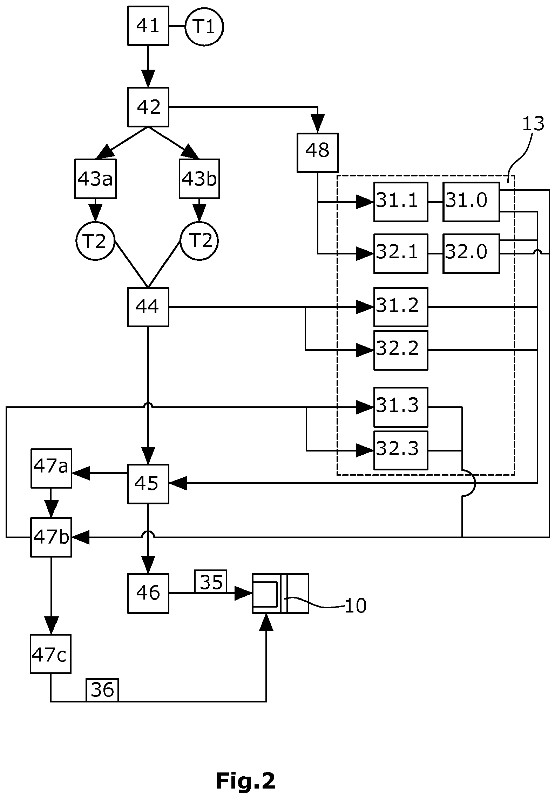

In der Figur 2 ist der Ablauf des erfindungsgemäßen Verfahrens zum Kalibrieren des Drehgebers 10 gezeigt, wobei zudem noch weitere Verfahrensschritte gezeigt sind, die optional stattfinden können.

Zunächst erfolgt ein Beschleunigen 41 der Antriebswelle 20 auf eine vorgegebene, vorzugsweise konstante, Drehzahl, insbesondere eine Drehzahl im Bereich von 1000 Umdrehungen pro Minute. Dies geschieht bei Vorliegen der ersten Sensortemperatur T1.

In einem ersten Durchgang der Kalibrierung 40 erfolgt sodann an zwei vorgegebenen Drehwinkelpositionen 21, 22 jeweils ein Erfassen 42 eines ersten Positions-Messwertes 31.1, 32.1 bei Vorliegen der ersten Sensortemperatur T1. Die beiden Drehwinkelpositionen 21, 22 sind grundsätzlich frei wählbar, bevorzugt aber - wie auch im gezeigten Beispiel - in einem Winkel von 180°, das heißt über den Umfang gesehen einander gegenüberliegend, an der Maschinenwelle 20 angeordnet. Die ersten Positions-Messwerte 31.1, 32.1 können innerhalb einer einzigen Umdrehung der Maschinenwelle 20 erfasst werden, so dass die Kalibrierung 40 relativ schnell erfolgen kann. Nach dem Erfassen der ersten Positions-Messwerte 31.1, 32.1 können diese in einem Speicher 13 abrufbar gespeichert werden, was mit dem Bezugszeichen 48 gekennzeichnet ist.

Je nach geplanter Anwendung des Drehgebers 10 kann nun ein Aufheizen 43a oder Abkühlen 43b der Sensoreinheit 12 auf eine zweite Sensortemperatur T2 erfolgen. Das Heizen 43a oder Kühlen 43b erfolgt mittels der Heiz-Kühleinrichtung 15 und resultiert in einer Sensortemperatur T2, die höher oder niedriger als die erste Sensortemperatur T1 ist. In einem regulären Betrieb kann die zweite Temperatur T2 beispielsweise durch eine sich aufheizende Komponente der Sensoreinheit 12, wie dem Mikrokontroller 19, einem Signalverstärker und/oder AD-Wandler, auftreten.

Sobald die Sensoreinheit 12 die zweite Temperatur T2 erreicht hat, erfolgt ein weiteres Erfassen 44 von Positions-Messwerten, vorliegend jeweils ein zweiter Positions-Messwert 31.2, 32.2 an den beiden bereits zuvor gemessenen Drehwinkelpositionen 21, 22. Die jetzige Erfassung 44 des zweiten Messwertes erfolgt also an denselben Drehwinkelpositionen 21, 22 bei Vorliegen der zweiten Sensortemperatur T2. Die erfassten zweiten Positions-Messwerte 31.2, 32.2 werden wiederum in einem Speicher 13 abrufbar gespeichert.

In einem nächsten Schritt erfolgt ein Ermitteln 45 einer Abweichung 35 jeweils zwischen dem erfassten zweiten Positions-Messwert 31.2, 32.2 und einem vorgegebenen Soll-Positions-Messwert 31.0, 32.0. Dazu können die Soll-Positions-Messwerte 31.0, 32.0 und die zweiten Positions-Messwerte 31.2, 32.2 aus dem Speicher 13 abgerufen werden. Die Soll-Positions-Messwerte 31.0, 32.0 können hierbei den im vorangegangenen Schritt 42 bei Raumtemperatur T1 erfassten ersten Positions-Messwerten 31.1, 32.1 entsprechen.

Anschließend erfolgt ein Korrigieren 46 eines Ausgangssignals des Drehgebers 10 um die ermittelte Abweichung 35 jeweils an den Drehwinkelpositionen 21, 22 bei Vorliegen der zweiten Sensortemperatur T2. Zumindest die Winkel-Abweichung 35 wird sodann in dem Speichermodul 13 für künftige Berechnungen und Auswertungen gespeichert. Optional kann zusätzlich ein Berechnen 47a zumindest eines dritten Positions-Messwertes 31.3, 32.3, der bei Vorliegen einer dritten Sensortemperatur T3 jeweils an den Drehwinkelposition 21, 22 zu erwarten ist, erfolgen. Ferner kann ein Ermitteln 47b jeweils einer Abweichung 36 zwischen dem berechneten dritten Positions-Messwert 31.3, 32.3 und dem vorgegebenen Soll-Positions-Messwert 31.0, 32.0 für die entsprechenden Drehwinkelpositionen 21, 22, und anschließend ein Korrigieren 47c des Ausgangssignals des Drehgebers 10 um die ermittelte Abweichung 36 jeweils an den Drehwinkelposition 21, 22 bei Vorliegen der dritten Sensortemperatur T3 erfolgen. Dadurch kann insbesondere für eine zwischen der ersten Temperatur T1 und der zweiten Temperatur T2 liegende Temperatur T3 die zu erwartenden Messwerte 31.3, 32.3 rechnerisch ermittelt werden, insbesondere durch Interpolieren der bekannten Messwerte 31.0, 32.0, 31.1, 32.1, 31.2, 32.2.

Dieses Vorgehen kann innerhalb weniger Umdrehungen der Maschinenwelle 20 erfolgen und/oder über einen gewissen Zeitraum automatisch von dem Drehgeber 10 wiederholt werden, so dass eine dauerhaft hohe Messgenauigkeit des Drehgebers 10 erreicht werden kann. Es ist zudem möglich, dass die temperaturabhängige Messung mehrfach pro Umdrehung erfolgt, so dass eine besonders exakte Kalibrierung des Drehgebers 10 erfolgt.

In einem anschließenden regulären Betrieb des Drehgebers 10 wird der an der jeweiligen Drehwinkelposition 21, 22 erfasste Positions-Messwert - je nach vorliegender Temperatur - um den in der Speichereinheit 13 gespeicherten Abweichungs- bzw. Korrekturwert 35, 36 korrigiert, so dass ein sodann um die Abweichung 35, 36 korrigierter Drehwinkelpositionswert an die Steuereinheit 24 zur Steuerung und Regelung des Antriebsmotors 23 übermittelt werden kann.

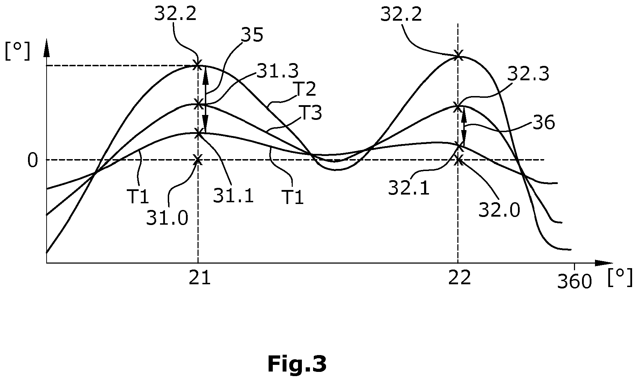

In der Figur 3 sind beispielhaft drei Winkelverläufe bei jeweils unterschiedlichen Sensortemperaturen T1, T2, T3 gezeigt. Hierbei sind die einzelnen Positions-Messwerte über den Umfang der Maschinenwelle 20, insbesondere an den vorliegend erfassten Drehwinkelpositionen 21, 22, gezeigt. Dabei zeigt eine durch die Soll-Positionswerte 31.0, 32.0 verlaufende Kurve eine Ideallinie der Positionswerte, die einer Angabe der tatsächlichen Drehwinkelpositionen entspricht. Der Ideal- bzw. Soll-Winkelverlauf entspricht vorliegend im Wesentlichen einer Geraden, so dass keinerlei Brems- oder Ruckelmomente eines Antriebsmotors berücksichtigt sind.

Die bei einer ersten Sensortemperatur T1, insbesondere einer Temperatur von etwa 21°Celsius, erfassten ersten Positions-Messwerte 31.1, 32.1 zeigen im Winkelverlauf eine nur sehr geringe Abweichung von der Idealkurve. Die bei einer zweiten Sensortemperatur T2, insbesondere einer stark erhöhten Temperatur, erfassten zweiten Positions-Messwerte 31.2, 32.2 zeigen im Winkelverlauf eine relativ starke Abweichung 35 von der bei Raumtemperatur T1 erfassten Winkelkurve. Ein dritter Winkelverlauf zeigt die bei einer dritten Sensortemperatur T3, die zwischen der ersten Sensortemperatur T1 und der zweiten Sensortemperatur T2 liegt, insbesondere rechnerisch ermittelten dritten Positions-Messwerte 31.3, 32.3. Dadurch kann für eine bestimmte, an der Sensoreinheit 12 vorliegende Temperatur T3 die erforderliche Abweichung 36 der erfassten Position-Messwerte erkannt und an dem Ausgangssignal des Drehgebers 10 eine entsprechende Korrektur vorgenommen werden.

Dadurch kann für jedes individuelle System ein Drehgeber mit einer besonders hohen Genauigkeit bei unterschiedlichen Temperaturen der Sensoreinheit bereitgestellt werden. Es sollte deutlich sein, dass der erfindungsgemäße Drehgeber nicht auf das vorliegend gezeigte Anwendungsbeispiel beschränkt ist, sondern zur Anwendung in unterschiedlichen Temperaturbereichen in geeigneter Weise ausgelegt sein kann.

### Bezugszeichenliste

- 10: Drehgeber
- 11: Erregereinheit
- 12: Sensoreinheit
- 13: Speichermodul
- 14: Temperatursensor
- 15: Heiz- und/oder Kühleinrichtung
- 16: Draht
- 17: Berechnungsmodul
- 18: Hallsensor, AMR-Sensor
- 19: Mikrocontroller

- 20: Maschinenwelle
- 21: erste Drehwinkelposition
- 22: zweite Drehwinkelposition
- 23: Antriebsmotor
- 24: Steuereinheit

- 31.0: Soll-Positions-Messwert
- 32.0: Soll-Positions-Messwert
- 31.1: erster Positions-Messwert
- 32.1: erster Positions-Messwert
- 31.2: zweiter Positions-Messwert
- 32.2: zweiter Positions-Messwert
- 31.3: dritter Positions-Messwert
- 32.3: dritter Positions-Messwert
- 35: Abweichung
- 36: Abweichung

- 40: Kalibrieren
- 41: Drehen Maschinenwelle
- 42: Erfassen Positions-Messwert
- 43a: Heizen
- 43b: Kühlen
- 44: Erfassen Positions-Messwert
- 45: Ermitteln Abweichung
- 46: Korrigieren des Ausgangssignals
- 47a: Berechnen Positions-Messwert
- 47b: Ermitteln Abweichung
- 47c: Korrigieren des Ausgangssignals
- 48: Speichern

## Patentansprüche

1. Verfahren zum Kalibrieren (40) eines Drehgebers (10) zur Erfassung einer Drehwinkelposition (21, 22) einer Maschinenwelle (20), wobei der Drehgeber (10) zumindest eine mit der Maschinenwelle (20) drehfest verbundene Erregereinheit (11) und eine mit der Erregereinheit (11) funktional zusammenwirkende, feststehende Sensoreinheit (12) aufweist, **mit den folgenden Schritten:**
- Versetzen (41) der Maschinenwelle (20) in eine Drehbewegung mit einer vorgegebenen Drehgeschwindigkeit bei Vorliegen einer ersten Sensortemperatur (T1),
- Erfassen (42) eines ersten Positions-Messwertes (31.1, 32.1) an einer vorgegebenen Drehwinkelposition (21, 22) bei Vorliegen der ersten Sensortemperatur (T1),
- lokales Heizen (43a) oder Kühlen (43b) der Sensoreinheit (12), so dass nur einzelne Bereiche oder Komponenten der Sensoreinheit (12) eine zweite Sensortemperatur (T2) aufweisen, die höher oder niedriger als die erste Sensortemperatur (T1) ist,
- Erfassen (44) eines zweiten Positions-Messwertes (31.2, 32.2) an der Drehwinkelposition (21, 22) bei Vorliegen der zweiten Sensortemperatur (T2),
- Ermitteln (45) einer Abweichung (35) zumindest zwischen dem zweiten Positions-Messwert (31.2, 32.2) und einem Soll-Positions-Messwert (31.0, 32.0), und
- Korrigieren (46) eines Ausgangssignals des Drehgebers (10) um die ermittelte Abweichung (35) an der Drehwinkelposition (21, 22) bei Vorliegen der zweiten Sensortemperatur (T2).

2. Verfahren nach Anspruch 1,
**dadurch gekennzeichnet, dass**
in einer Umdrehung der Maschinenwelle (20) an mindestens zwei vorgegebenen Drehwinkelpositionen (21, 22) jeweils ein erster Positions-Messwert (31.1, 32.1) bei Vorliegen der ersten Sensortemperatur (T1) erfasst wird, und
nach dem Heizen (43a) oder Kühlen (43b) der Sensoreinheit (12) auf eine zweite Sensortemperatur (T2) in einer Umdrehung der Maschinenwelle (20) an den Drehwinkelpositionen (21, 22) jeweils ein zweiter Positions-Messwert (31.2, 32.2) bei Vorliegen der zweiten Sensortemperatur (T2) erfasst wird, und
jeweils eine Abweichung (35) des zweiten Positions-Messwertes (31.2, 32.2) von einem Soll-Positions-Messwert (31.0, 32,0) ermittelt wird, und
ein Korrigieren (46) des Ausgangssignals des Drehgebers (10) um die jeweils ermittelte Abweichung (35) an den Drehwinkelpositionen (21, 22) bei Vorliegen der zweiten Sensortemperatur (T2) erfolgt.

3. Verfahren nach einem der Ansprüche 1 oder 2,
**dadurch gekennzeichnet, dass**
zusätzlich ein Berechnen (47a) zumindest eines dritten Positions-Messwertes (31.3, 32.3), der an der Drehwinkelposition (21, 22) bei Vorliegen einer dritten Sensortemperatur (T3) zu erwarten ist, ein Ermitteln (47b) einer Abweichung (36) zwischen dem berechneten dritten Positions-Messwert (31.3, 32.3) und dem Soll-Positions-Messwert (31.0, 32.0), und
ein Korrigieren (47c) des Ausgangssignals des Drehgebers (10) um die ermittelte Abweichung (36) an der Drehwinkelposition (21, 22) bei Vorliegen der dritten Sensortemperatur (T3) erfolgt.

4. Verfahren nach einem der voranstehenden Ansprüche,
**dadurch gekennzeichnet, dass**
der Soll-Positions-Messwert (31.0, 32.0) durch den ersten Positions-Messwert (31.1, 32.1) gebildet wird.

5. Verfahren nach einem der Ansprüche 1 bis 3,
**dadurch gekennzeichnet, dass**
der Soll-Positions-Messwert (31.0, 32.0) mittels eines Referenzwertgebers oder mittels eines hochgezählten Zeitwertes, der einer vorgegebenen Laufzeit der Drehbewegung von der ersten Drehwinkelposition (21, 22) bis zu der zweiten Drehwinkelposition (21, 22) entspricht, ermittelt wird.

6. Verfahren nach einem der voranstehenden Ansprüche,
**dadurch gekennzeichnet, dass**
ein Speichern (48) zumindest eines Positions-Messwertes (31.0, 32.0, 31.1, 32.1, 31.2, 32.2, 31.3, 32.3) und/oder der Abweichung (35, 36) in einem Speicher (13) erfolgt.

7. Verfahren nach einem der voranstehenden Ansprüche,
**dadurch gekennzeichnet, dass**
in einem Betrieb des Drehgebers (10) die Sensortemperatur (T1, T2, T3) kontinuierlich erfasst wird.

8. Drehgeber (10) zur Bestimmung einer korrigierten Drehwinkelposition (21, 22) einer Maschinenwelle (20), ausgestaltet zur Durchführung eines Verfahrens nach einem der Ansprüche 1-7, wobei der Drehgeber zumindest eine mit der Maschinenwelle (20) drehfest verbindbare Erregereinheit (11) aufweist, und eine mit der Erregereinheit (11) funktional zusammenwirkende, feststehende Sensoreinheit (12), wobei der Drehgeber (10) einen Temperatursensor (14) und ein Berechnungsmodul (17) zur temperaturabhängigen Kalibrierung sowie zur Bestimmung einer um eine Temperaturabweichung korrigierten Drehwinkelposition und eine Heiz- und/oder Kühleinrichtung (15) zum aktiven lokalen Heizen (43a) beziehungsweise Kühlen (43b) einzelner Bereiche oder Komponenten der Sensoreinheit (12) aufweist.

9. Drehgeber (1) nach Anspruch 8,
**dadurch gekennzeichnet, dass**
der Drehgeber (10) ein Speichermodul (13) zum Speichern (48) zumindest eines Positions-Messwertes (31.0, 32.0, 31.1, 32.1, 31.2, 32.2, 31.3, 32.3) und/oder einer Abweichung (35, 36) aufweist.

10. Drehgeber (1) nach einem der Ansprüche 8 oder 9,
**dadurch gekennzeichnet, dass**
der Drehgeber (10) ein Berechnungsmodul (17) zum Berechnen (45, 47a, 47b) eines Positions-Messwertes (31.0, 32.0, 31.1, 32.1, 31.2, 32.2, 31.3, 32.3) und/oder einer Abweichung (35, 36) zwischen einem Positions-Messwert (31.1, 32.1, 31.2, 32.2, 31.3, 32.3) und einem Soll-Positions-Messwert (31.0, 32.0) für zumindest eine vorgegebene Sensortemperatur (T1, T2, T3) aufweist.

11. Drehgeber (1) nach einem der Ansprüche 8 bis 10,
**dadurch gekennzeichnet, dass**
die Heiz- und/oder Kühleinrichtung (15) zumindest einen elektrischen Draht (16) aufweist, der bei einer Bestromung Wärme erzeugt.

## Claims

1. Method for calibrating (40) a rotary encoder (10) for detecting a rotary angle position (21, 22) of a machine shaft (20), the rotary encoder (10) comprising at least one exciter unit (11) co-rotatably connected to the machine shaft (20) and a static sensor unit (12) functionally interacting with the exciter unit (11), comprising the following steps:
- setting (41) the machine shaft (20) in rotary motion with a predefined rotary speed at a first sensor temperature (T1),
- detecting (42) a first position measurement value (31.1, 32.1) at a predefined rotary angle position (21, 22) at the first sensor temperature (T1),
- local heating (43a) or cooling (43b) of the sensor unit (12), so that only individual regions or components of the sensor unit (12) have a second sensor temperature (T2) which is higher or lower than the first sensor temperature (T1),
- detecting (44) a second position measurement value (31.2, 32.2) at the rotary angle position (21, 22) at the second sensor temperature (T2),
- determining (45) a deviation (35) at least between the second position measurement value (31.2, 32.2) and a target position measurement value (31.0, 32.0), and
- correcting (46) an output signal of the rotary encoder (10) by the determined deviation (35) at the rotary angle position (21, 22) at the second sensor temperature (T2).

2. Method according to claim 1,
**characterized in that**
in one revolution of the machine shaft (20), a first position measurement value (31.1, 32.1) is detected at each of at least two predefined rotary angle positions (21, 22) at the first sensor temperature (T1), and
after heating (43a) or cooling (43b) the sensor unit (12) to a second sensor temperature (T2), in one revolution of the machine shaft (20), a second position measurement value (31.2, 32.2) is detected at each of the rotary angle positions (21, 22) at the second sensor temperature (T2), and
a deviation (35) of the second position measurement value (31.2, 32.2) from a target position measurement value (31.0, 32.0) is determined respectively, and
correcting (46) the output signal of the rotary encoder (10) by the respective determined deviation (35) at the rotary angle positions (21, 22) at the second sensor temperature (T2) is carried out.

3. Method according to one of claims 1 or 2,
**characterized in that**
additionally, calculating (47a) at least a third position measurement value (31.3, 32.3) to be expected at the rotary angle position (21, 22) at a third sensor temperature (T3),
determining (47b) a deviation (36) between the calculated third position measurement value (31.3, 32.3) and the target position measurement value (31.0, 32.0), and
correcting (47c) the output signal of the rotary encoder (10) by the determined deviation (36) at the rotary angle position (21, 22) at the third sensor temperature (T3) is carried out.

4. Method according to one of the preceding claims,
**characterized in that**
the target position measurement value (31.0, 32.0) is defined by the first position measurement value (31.1, 32.1).

5. Method according to one of claims 1 to 3,
**characterized in that**
the target position measurement value (31.0, 32.0) is determined by means of a reference encoder or by means of an incremented time value corresponding to a predefined duration of the rotary motion from the first rotary position (21, 22) to the second rotary position (21, 22).

6. Method according to one of the preceding claims,
**characterized in that**
storing (48) of at least one position measurement value (31.0, 32.0, 31.1, 32.1, 31.2, 32.2, 31.3, 32.3) and/or of the deviation (35, 36) in a memory (13) is carried out.

7. Method according to one of the preceding claims,
**characterized in that**
the sensor temperature (T1, T2, T3) is continuously detected during operation of the rotary encoder (10).

8. Rotary encoder (10) for determining a corrected rotary angle position (21, 22) of a machine shaft (20), configured to execute a method according to one of claims 1 - 7,
wherein the rotary encoder comprises at least one exciter unit (11) which can be co-rotatably connected to the machine shaft (20), and a static sensor unit (12) which functionally interacts with the exciter unit (11),
wherein the rotary encoder (10) comprises a temperature sensor (14) and a calculation module (17) for temperature-dependent calibration and for determining a rotary angle position which is corrected by a temperature deviation, and a heating and/or cooling device (15) for active local heating (43a) or cooling (43b) of individual regions or components of the sensor unit (12).

9. Rotary encoder (1) according to claim 8,
**characterized in that**
the rotary encoder (10) comprises a memory module (13) for storing (48) at least one position measurement value (31.0, 32.0, 31.1, 32.1, 31.2, 32.2, 31.3, 32.3) and/or a deviation (35, 36).

10. Rotary encoder (1) according to one of claims 8 or 9,
**characterized in that**
the rotary encoder (10) comprises a calculation module (17) for calculating (45, 47a, 47b) a position measurement value (31.0, 32.0, 31.1, 32.1, 31.2, 32.2, 31.3, 32.3) and/or a deviation (35, 36) between a position measurement value (31.1, 32.1, 31.2, 32.2, 31.3, 32.3) and a target position measurement value (31.0, 32.0) for at least one predefined sensor temperature (T1, T2, T3).

11. Rotary encoder (1) according to one of claims 8 to 10,
**characterized in that**
the heating and/or cooling device (15) comprises at least one electric wire (16) which generates heat when energized.

## Revendications

1. Procédé de calibration (40) d'un codeur rotatif (10) pour détecter une position d'angle de rotation (21, 22) d'un arbre de machine (20), le codeur rotatif (10) comprenant au moins une unité d'excitation (11) connectée de manière solidaire en rotation à l'arbre de machine (20) et une unité de capteur (12) fixe coopérant fonctionnellement avec l'unité d'excitation (11), avec les étapes suivantes:
- mettre (41) l'arbre de machine (20) en rotation avec une vitesse de rotation prédéterminée, lorsqu'une première température de capteur (T1) est présente,
- détecter (42) une première valeur de position mesurée (31.1, 32.1) à une position d'angle de rotation (21, 22) prédéterminée, lorsqu'une première température de capteur (T1) est présente,
- chauffer (43a) ou refroidir (43b) localement l'unité de capteur (12) de sorte que seulement des régions ou composants individuels de l'unité de capteur (12) présentent une deuxième température de capteur (T2) supérieure ou inférieure à la première température de capteur (T1),
- détecter (44) une deuxième valeur de position mesurée (31.2, 32.2) à la position d'angle de rotation (21, 22) prédéterminée, lorsqu'une deuxième température de capteur (T2) est présente,
- déterminer (45) un écart (35) au moins entre la deuxième valeur de position mesurée (31.2, 32.2) et une valeur de position mesurée cible (31.0, 32.0), et
- corriger (46) un signal de sortie du codeur rotatif (10) par l'écart déterminé (35) à la position d'angle de rotation (21, 22), lorsque la deuxième température de capteur (T2) est présente.

2. Procédé selon la revendication 1, **caractérisé en ce que**, dans un tour de l'arbre de machine (20), une première valeur de position mesurée (31.1, 32.1) est détectée, respectivement, à au moins deux positions d'angle de rotation (21, 22) prédéterminées, lorsque la première température de capteur (T1) est présente, et
après avoir chauffé (43a) ou refroidi (43b) l'unité de capteur (12) à une deuxième température de capteur (T2), dans un tour de l'arbre de machine (20), une deuxième valeur de position mesurée (31.2, 32.2) est détectée, respectivement, auxdites positions d'angle de rotation (21, 22) prédéterminées, lorsque la deuxième température de capteur (T2) est présente, et
dans chaque cas, un écart (35) de la deuxième valeur de position mesurée (31.2, 32.2) d'une valeur de position mesurée cible (31.0, 32.0) est déterminé, et
une correction (46) du signal de sortie du codeur rotatif (10) par l'écart (35) respectivement déterminé auxdites positions d'angle de rotation (21, 22), est exécutée, lorsque la deuxième température de capteur (T2) est présente.

3. Procédé selon la revendication 1 ou 2, **caractérisé en ce qu'**il est effectué
en plus, un calcul (47a) d'au moins une troisième valeur de position mesurée (31.3, 32.3) que l'on peut attendre à la position d'angle de rotation (21, 22), lorsqu'une troisième température de capteur (T3) est présente,
une détermination (47b) d'un écart entre la troisième valeur de position mesurée (31.3, 32.3) calculée et la valeur de position mesurée cible (31.0, 32.0), et
une correction (47c) du signal de sortie du codeur rotatif (10) par l'écart (35) déterminé à ladite position d'angle de rotation (21, 22), lorsque la troisième température de capteur (T3) est présente.

4. Procédé selon l'une quelconque des revendications précédentes, **caractérisé en ce que** la valeur de position mesurée cible (31.0, 32.0) est formée par la première valeur de position mesurée (31.1, 32.1).

5. Procédé selon l'une quelconque des revendications 1 à 3, **caractérisé en ce que** la valeur de position mesurée cible (31.0, 32.0) est déterminée par un capteur de valeur de référence ou par une valeur de temps incrémentée correspondant à un temps de course prédéterminé du mouvement de rotation de la première position d'angle de rotation (21, 22) jusqu'à la deuxième position d'angle de rotation (21, 22).

6. Procédé selon l'une quelconque des revendications précédentes, **caractérisé en ce que** l'on effectue le stockage (48) d'au moins une valeur de position mesurée (31.0, 32.0, 31.1, 32.1, 31.2, 32.2, 31.3, 32.3) et/ou de l'écart (35, 36) dans une mémoire (13).

7. Procédé selon l'une quelconque des revendications précédentes, **caractérisé en ce que** pendant le fonctionnement du codeur rotatif (10) la température de capteur (T1, T2, T3) est déterminée en continu.

8. Codeur rotatif (10) pour déterminer une position d'angle de rotation (21, 22) corrigée d'un arbre de machine (20), équipé pour l'exécution d'un procédé selon une des revendications 1-7, ledit codeur rotatif comprenant au moins une unité d'excitation (11) connectée de manière solidaire en rotation à l'arbre de machine (20) et une unité de capteur (12) fixe coopérant fonctionnellement avec l'unité d'excitation (11), ledit codeur rotatif (10) comprenant un capteur de température (14) et un module de calcul (17) pour la calibration en fonction de la température et pour déterminer une position d'angle de rotation corrigée par un écart de température, et un moyen de chauffage et/ou refroidissement (15) pour le chauffage (43a) ou refroidissement (43b) actif local de régions ou composants individuels de l'unité de capteur (12).

9. Codeur rotatif (10) selon la revendication 8, **caractérisé en ce que** le codeur rotatif (10) comprend un module mémoire (13) pour stocker (48) au moins une valeur de position mesurée (31.0, 32.0, 31.1, 32.1, 31.2, 32.2, 31.3, 32.3) et/ou un écart (35, 36).

10. Codeur rotatif (10) selon la revendication 8 ou 9, **caractérisé en ce que** le codeur rotatif (10) comprend un module de calcul (17) pour calculer (45, 47a, 47b) une valeur de position mesurée (31.0, 32.0, 31.1, 32.1, 31.2, 32.2, 31.3, 32.3) et/ou un écart (35, 36) entre une valeur de position mesurée (31.1, 32.1, 31.2, 32.2, 31.3, 32.3) et une valeur de position mesurée cible (31.0, 32.0) pour au moins une température de capteur (T1, T2, T3) prédéterminée.

11. Codeur rotatif (10) selon les revendications 8 à 10, **caractérisé en ce que** le moyen de chauffage et/ou refroidissement (15) comprend au moins un fil électrique (16) qui génère de la chaleur lorsqu'il est alimenté en courant.
